# FASCICULE DE BREVET EUROPEEN

(11) **EP 4 327 018 B1**
(45) Date de publication et mention de la délivrance du brevet: **02.09.2026**
(21) Numéro de dépôt: 22722543.0
(22) Date de dépôt: 14.04.2022
(51) Int. Cl.: F21V 8/00, G02B 6/02

(54) **PROCEDE DE PREPARATION DE FIBRES OPTIQUES A EMISSION LUMINEUSE LATERALE ET INSTALLATION POUR SA MISE EN OEUVRE**
VERFAHREN ZUR HERSTELLUNG VON OPTISCHEN FASERN MIT SEITLICHER LICHTEMISSION UND INSTALLATION ZUR DURCHFÜHRUNG DAVON
METHOD FOR PREPARING OPTICAL FIBRES WITH LATERAL LIGHT EMISSION AND INSTALLATION FOR IMPLEMENTING SAME

(30) Priorité: 19.04.2021 FR 2104035
(43) Date de publication de la demande: 28.02.2024
(73) Titulaire: SATAB, 43240 Saint-Just-Malmont (FR)
(72) Inventeur: NOULETTE, Jacques, 38290 Frontonas (FR)
(74) Mandataire: Ipsilon
(86) Numéro de dépôt international: PCT/FR2022/050705
(87) Numéro de publication internationale: WO 2022/223911

(56) Documents cités:
- US-A1- 2002 037 133
- US-A1- 2016 291 277
- US-A1- 2017 315 318

## Description

### Domaine Technique

La présente invention concerne le domaine des fibres optiques à émergence latérale de la lumière ainsi que les procédés d'obtention de ces fibres optiques.

L'objet de l'invention vise plus particulièrement un système lumineux mettant en œuvre des fibres optiques à émergence latérale de la lumière, trouvant des applications dans de nombreux domaines techniques comme par exemple, le bâtiment, l'aéronautique, le domaine médical et avantageusement l'automobile.

### Technique antérieure

L'art antérieur connait les fibres optiques à émission latérale de lumière comportant un cœur véhiculant la lumière et entouré par une gaine pourvue d'altérations ou de modifications de surface à partir desquelles le flux lumineux émerge. Par exemple, le brevet FR 2 714 147 propose de réaliser ces fibres en faisant défiler les fibres optiques dans une cabine de sablage projetant un abrasif sous haute pression. Pour éviter que les fibres optiques ne se plient lors du traitement sous l'effet de la haute pression exercée, les fibres optiques sont soumises à un mécanisme de mise en tension susceptible d'entrainer des risques de cassure des fibres optiques. Par ailleurs, cette technique ne permet pas de maitriser facilement les dimensions et la localisation des altérations réalisées sur les fibres optiques. Or, il apparait nécessaire de maitriser les dimensions et la localisation des altérations le long de la fibre optique de manière à obtenir une homogénéité de la lumière sur toute la longueur de la fibre optique.

Le brevet EP3 303 667 propose de réaliser un tissu avec des fibres optiques tissées en trame et en chaîne et de traiter en surface ce tissu par un traitement mécanique, chimique ou thermique pour former des altérations de surface permettant à la lumière se propageant dans la fibre optique, d'émerger par ces altérations de surface. Une fois traitées, les fibres optiques sont retirées du tissu afin d'être insérées dans une enveloppe translucide pour réaliser un système lumineux à émission lumineuse latérale. Cette technique de tissage entraine une augmentation des coûts de fabrication et présente une limitation quant à la longueur des fibres optiques obtenues. Par ailleurs, le tissage entraine l'apparition de points de lumière ayant une luminance excessive.

La demande de brevet US 2017/315318 décrit un procédé de préparation de fibres optiques à émission lumineuse latérale à l'aide d'un faisceau laser. Cette demande prévoit le déplacement en translation de la fibre optique avec une possibilité de rotation autour de son axe longitudinal. Ce procédé de préparation n'apparait pas simple à mettre en œuvre.

La demande de brevet US 2002/037133 décrit un procédé de préparation de fibres optiques à émission lumineuse latérale à l'aide d'un appareil laser monté mobile sur une table déplaçable selon deux directions. La fibre peut être entrainée en rotation. Ce procédé de préparation est relativement complexe à mettre en œuvre.

### Exposé de l'invention

La présente invention vise à remédier aux inconvénients de l'art antérieur en proposant un nouveau procédé de préparation de fibres optiques à émission latérale de lumière, de conception simple et peu onéreux, adapté pour obtenir une homogénéité de la lumière sur toute la longueur des fibres optiques et ce, pour des fibres optiques de grande longueur.

Pour atteindre un tel objectif, l'objet de l'invention est un procédé de préparation de fibres optiques composées chacune d'un cœur entouré par une gaine, en vue de créer des fibres optiques à émission lumineuse latérale. Le procédé est tel qu'il assure le défilement en translation pour au moins une fibre optique devant un poste d'émission d'un faisceau laser, et qu'il déplace alternativement selon un premier sens d'une direction transversale à la direction de translation des fibres optiques et selon un second sens de la direction transversale, opposé au premier sens, le faisceau laser dirigé vers les fibres optiques pour créer des altérations ponctuelles de la gaine des fibres optiques.

Selon un exemple préféré, on assure le défilement en translation pour une série de fibres optiques disposées les unes à côté des autres, devant un poste d'émission d'un faisceau laser.

Avantageusement, on déplace le faisceau laser selon la direction transversale avec une trajectoire débutant en aval de la première fibre optique rencontrée et finissant en amont de la dernière fibre optique rencontrée.

De préférence, on assure une mise en tension des fibres optiques lors de leur défilement en translation devant le poste d'émission du faisceau laser.

Selon une caractéristique de mise en œuvre, on assure le défilement en translation des fibres optiques selon une vitesse variable pour créer sur chaque fibre optique, des altérations ponctuelles dont au moins certaines d'entre elles présentent des distances d'écartement différentes.

Avantageusement, on assure le défilement en translation des fibres optiques selon une vitesse variable pour obtenir une homogénéité de la lumière sur toute la longueur d'un système lumineux à émission lumineuse latérale comportant une ou plusieurs fibres optiques.

Par exemple, le faisceau laser présente une puissance constante.

Selon une variante de mise en œuvre, après la création des altérations ponctuelles, les fibres optiques sont découpées et insérées dans une enveloppe translucide pour former un système lumineux à émission lumineuse latérale.

Par exemple, avant leur découpage, les fibres optiques sont stockées temporairement.

Un autre objet de l'invention est de proposer une installation de préparation de fibres optiques composées chacune d'un cœur entouré par une gaine, en vue de former un système lumineux à émission lumineuse latérale, cette installation comportant :
- un poste de distribution comportant pour chaque fibre optique, un dévidoir d'une fibre optique,
- un système assurant la translation des fibres optiques pour assurer leur défilement devant un poste d'émission d'un faisceau laser,
- un poste d'émission d'un faisceau laser déplacé selon une direction transversale à la direction de translation des fibres optiques pour créer des altérations ponctuelles de la gaine des fibres optiques.

Avantageusement, le système assurant la translation des fibres optiques possède une vitesse variable.

De préférence, l'installation comporte un système de prise en charge des fibres optiques issues des dévidoirs afin de les positionner parallèlement les unes à côté des autres.

De préférence, l'installation comporte un poste de découpe des fibres optiques.

Typiquement, l'installation comporte un système de guidage des fibres optiques permettant de maitriser l'entraxe entre les fibres optiques et/ou un dispositif de mise sous tension de chacune des fibres optiques.

### Brève description des dessins

[Fig. 1] La Figure 1 est une vue en plan d'une fibre optique avant sa préparation selon le procédé conforme à l'invention.
[Fig. 2] La Figure 2 est une vue en plan d'une fibre optique après application du procédé de préparation conforme à l'invention.
[Fig. 3] La Figure 3 est une vue en perspective d'une fibre optique après application du procédé de préparation conforme à l'invention.
[Fig. 4] La Figure 4 est une vue en plan d'une série de fibres optiques entrainées en translation parallèlement entre elles avant la réalisation de l'opération de traitement laser conforme à l'invention.
[Fig. 5] La Figure 5 est une vue en plan montrant la trace du faisceau laser appliquée lors de la translation d'une série de fibres optiques.
[Fig. 6] La Figure 6 est une vue en perspective d'un exemple de réalisation d'une installation pour la mise en œuvre du procédé de préparation de fibres optiques conforme à l'invention.
[Fig. 7] La Figure 7 est une vue d'un détail en perspective de l'installation illustrée à la figure 6.

### Description des modes de réalisation

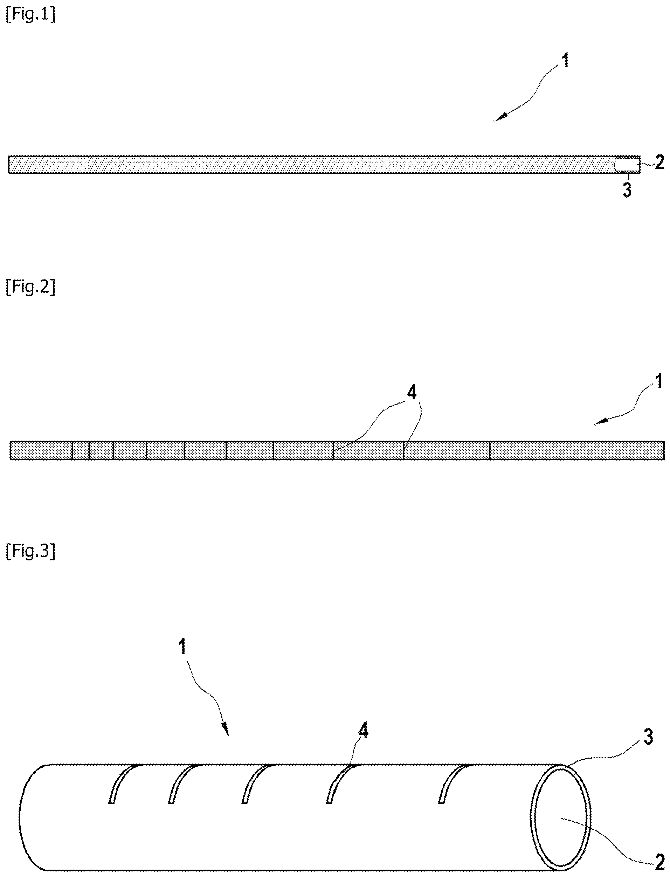

L'objet de l'invention concerne un procédé de préparation de fibres optiques de toutes natures connues, en vue d'obtenir des fibres optiques à émission lumineuse latérale. Tel que cela ressort de la figure 1, il est rappelé qu'une fibre optique 1 est un guide d'onde pour la lumière comportant un cœur 2 réalisé par un milieu translucide et revêtu d'une couche d'un autre milieu translucide d'indice de réfraction différent et appelée gaine 3 dans la suite de la description. Par exemple, la fibre optique 1 est à base de poly méthacrylate de méthyle (PMMA).

Dans le cadre de l'invention, la gaine 3 de la fibre optique 1 présente des altérations ponctuelles 4 correspondant à des destructions ou modifications de surface mettant à nu le cœur de la fibre optique. Ces altérations 4 sont le siège d'une émergence lumineuse lorsqu'un flux lumineux est présent dans la fibre optique 1. Les fibres optiques 1 sont découpées et insérées dans une enveloppe translucide pour former un système lumineux à émission lumineuse latérale. Typiquement, un système lumineux à émission lumineuse latérale comporte de une à quinze fibres optiques 1 insérées dans l'enveloppe translucide.

Les figures 2 et 3 illustrent à titre d'exemple, des fibres optiques 1 à émission lumineuse latérale par les altérations ponctuelles 4. Ces fibres optiques 1 à émission lumineuse latérale sont obtenues selon le procédé de préparation ou de traitement conforme à l'invention qui est décrit ci-après.

Selon le procédé conforme à l'invention, on :
- assure le défilement en translation selon une direction de translation A, pour une série de fibres optiques 1 disposées les unes à côté des autres, devant un poste d'émission d'un faisceau laser F,
- déplace selon une direction T transversale à la direction de translation des fibres optiques 1, le faisceau laser F dirigé vers les fibres optiques pour créer les altérations ponctuelles 4 de la gaine 3 des fibres optiques 1.

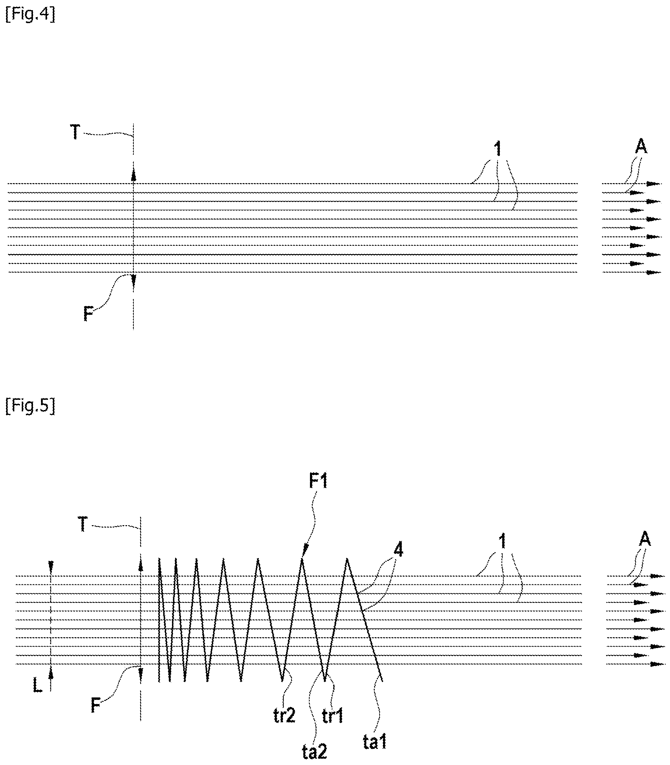

Tel que cela ressort plus précisément des figures 4 et 5, le procédé selon l'invention consiste à déplacer en translation les fibres optiques 1 selon une direction de translation A correspondant au sens d'élongation rectiligne des fibres optiques. En d'autres termes, chaque fibre optique 1 est déplacée en translation en appliquant avantageusement un effort de traction sur la fibre optique dans le sens de sa longueur. Dans les exemples illustrés sur les dessins, le procédé vise à déplacer ensemble, plusieurs fibres optiques positionnées parallèlement les unes aux autres. Bien entendu, le procédé selon l'invention peut être mis en œuvre en déplaçant en translation uniquement une fibre optique 1 devant le faisceau laser.

En amont du faisceau laser F, les fibres optiques 1 sont déplacées en étant positionnées parallèlement entre elles selon un pas d'écartement ou entraxe compris entre 1,5mm et 2,5mm et par exemple égal à 1,8mm. Les fibres optiques 1 sont situées dans un plan d'extension typiquement horizontal, en occupant ensemble une largeur totale L prise perpendiculairement à la direction de déplacement. Cette largeur totale L est comprise entre 7mm et 30 mm pour un nombre de fibres optiques 1 respectivement égale à 4 et 11. Bien entendu, le nombre de fibres optiques déplacées simultanément peut être quelconque.

Le faisceau laser F est déplacé selon une direction de déplacement T transversale à la direction de translation A des fibres optiques 1, en étant dirigé vers les fibres optiques pour créer les altérations ponctuelles 4 dans la gaine 3. Il doit être considéré que le faisceau laser présente un dimensionnement adapté pour réaliser des altérations ponctuelles 4 dans la gaine 3. Avantageusement, le faisceau laser F possède une puissance constante.

Selon une caractéristique préférée de mise en œuvre, les fibres optiques 1 sont mises en tension lors de leur défilement en translation devant le poste d'émission du faisceau laser F. En d'autres termes, les fibres optiques 1 sont placées dans une position rectiligne lorsque le faisceau laser F réalise les altérations ponctuelles 4.

Dans l'exemple illustré aux figures 4 et 5, la direction de déplacement T du faisceau laser est perpendiculaire à la direction de translation A des fibres optiques 1. Bien entendu, il peut être envisagé que la direction de déplacement T du faisceau laser ne soit pas perpendiculaire à la direction de translation A des fibres optiques 1.

Selon une caractéristique avantageuse de réalisation, le procédé consiste à déplacer le faisceau laser F alternativement selon un premier sens de la direction de déplacement T et selon un second sens de la direction de déplacement T, opposé au premier sens. En d'autres termes, la trajectoire du faisceau laser F est composée d'une suite de trajets allers (tai) et retours (tri) effectués selon la direction de déplacement transversale T, comme illustré à la figure 5 qui montre à titre d'exemple la trace F1 du faisceau laser F (avec i, le nombre d'aller et retour). Pour chaque trajet aller et retour (tai-tri), le faisceau laser F rencontre la totalité des fibres optiques à savoir 11 fibres optiques dans l'exemple illustré aux figures 4 et 5.

Il est à noter que chaque fibre optique 1 est pourvue d'altérations ponctuelles 4 réalisées successivement par les trajets d'aller-retour du faisceau laser (ta1-tr1-ta2-tr2-...tai-tri). Compte tenu du déplacement transversal du faisceau laser F par rapport à la série de fibres optiques 1, il est à noter que la distance entre deux altérations ponctuelles 4 consécutives dues aux trajets aller et retour du faisceau laser est différente d'une fibre optique à l'autre. Par exemple, la distance entre les deux altérations ponctuelles 4 consécutives dues par exemple aux trajets ta1-tr1 et réalisées sur la première fibre optique rencontrée est supérieure à la distance entre les deux altérations ponctuelles 4 consécutives dues aux trajets ta1-tr1 et réalisées sur la deuxième fibre optique rencontrée.

Selon une caractéristique avantageuse de réalisation, le faisceau laser F est déplacé selon la direction de déplacement transversale T avec une trajectoire débutant en aval de la première fibre optique 1 rencontrée et finissant en amont de la dernière fibre optique rencontrée. En d'autres termes, la trajectoire du faisceau laser F est supérieure à la largeur totale L comme cela apparait clairement à la figure 5. Il est à noter que la vitesse de balayage ou de déplacement du faisceau laser est de préférence constante.

Il s'ensuit qu'il peut être obtenu des altérations ponctuelles 4 de mêmes dimensions sur l'ensemble des fibres optiques de la série, pour chaque trajet du faisceau laser F. La gaine 3 de chaque fibre optique présente des altérations ponctuelles 4 de largeur constante aménagées parallèlement entre elles selon une portion de la circonférence (figure 3). Chaque altération ponctuelle 4 se présente sous la forme d'un arc de cercle s'étendant angulairement entre 50° et 70° en présentant une largeur sensiblement uniforme comprise entre 200 micromètres et 300 micromètres.

Avantageusement, le procédé consiste à assurer le défilement en translation des fibres optiques 1 selon une vitesse variable pour créer sur chaque fibre optique, des altérations ponctuelles 4 dont au moins certaines d'entre elles présentent des distances d'écartement différentes. La figure 5 illustre à titre d'exemple la trace F1 du faisceau laser pour une variation donnée de la vitesse de translation des fibres optiques. Dans l'exemple illustré, la vitesse de translation des fibres optiques 1 diminue progressivement de sorte que le premier trajet aller-retour (ta1-tr1) du faisceau laser correspond à une distance de déplacement des fibres optiques plus grande par rapport à la distance de déplacement pendant le deuxième trajet aller-retour (ta2-tr2) du faisceau laser, et ainsi de suite.

Il s'ensuit que les altérations ponctuelles 4 réalisées sur les fibres optiques 1 présentent des distances d'écartement différentes, comme cela apparait clairement sur les figures 2, 3 et 5. Ainsi, pour la première fibre optique rencontrée, la distance entre les deux altérations ponctuelles 4 consécutives dues au premier trajet aller et retour (ta1-tr1) du faisceau laser est inférieure à la distance entre les deux altérations ponctuelles 4 dues au deuxième trajet aller et retour (ta2-tr2).

La variation de la vitesse sur la longueur de la fibre optique permet ainsi d'ajuster le traitement laser et en particulier la position des altérations ponctuelles 4 le long de la fibre optique. De manière avantageuse, la variation de la vitesse sur la longueur de la fibre optique est déterminée pour obtenir une homogénéité de la lumière sur toute la longueur de la fibre optique 1 ou sur toute la longueur du système lumineux à émission lumineuse latérale incluant plusieurs fibres optiques 1. Une telle homogénéité de la lumière correspond à une mesure de la luminance en différentes zones du système lumineux à émission lumineuse latérale et à une comparaison entre les minimums et les maximums de luminance obtenus. Les écarts de luminance sont comparés à un seuil pour déterminer le caractère homogène de la lumière. Par exemple, une homogénéité supérieure à 50% pourrait être considérée comme suffisante en sachant que plus la fibre optique est longue, plus l'homogénéité est faible.

Après la création des altérations ponctuelles 4, les fibres optiques 1 sont découpées et insérées dans une enveloppe translucide pour former le système lumineux à émission lumineuse latérale. Comme expliqué, le système lumineux à émission lumineuse latérale comporte typiquement de une à quinze fibres optiques insérées dans une enveloppe translucide. Il est à noter que les fibres optiques 1 peuvent être insérées directement dans l'enveloppe translucide après leur découpage ou être stockées temporairement avant leur insertion dans l'enveloppe translucide. Selon une autre variante de réalisation, les fibres optiques peuvent être stockées temporairement, avant leur découpage.

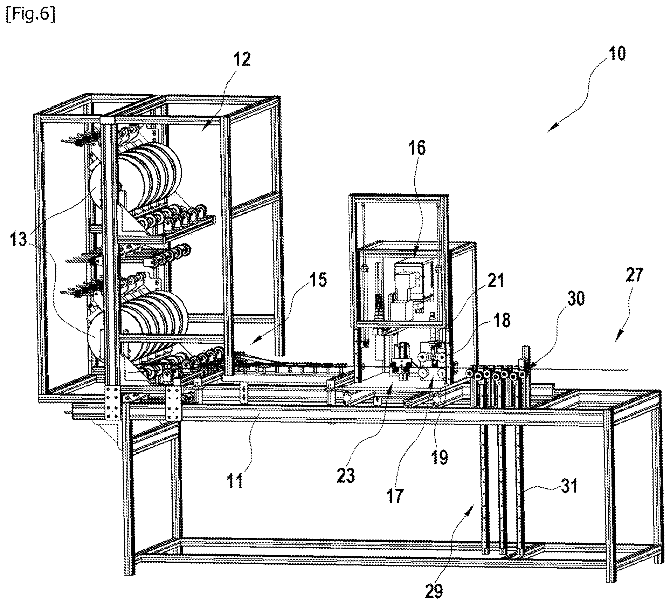

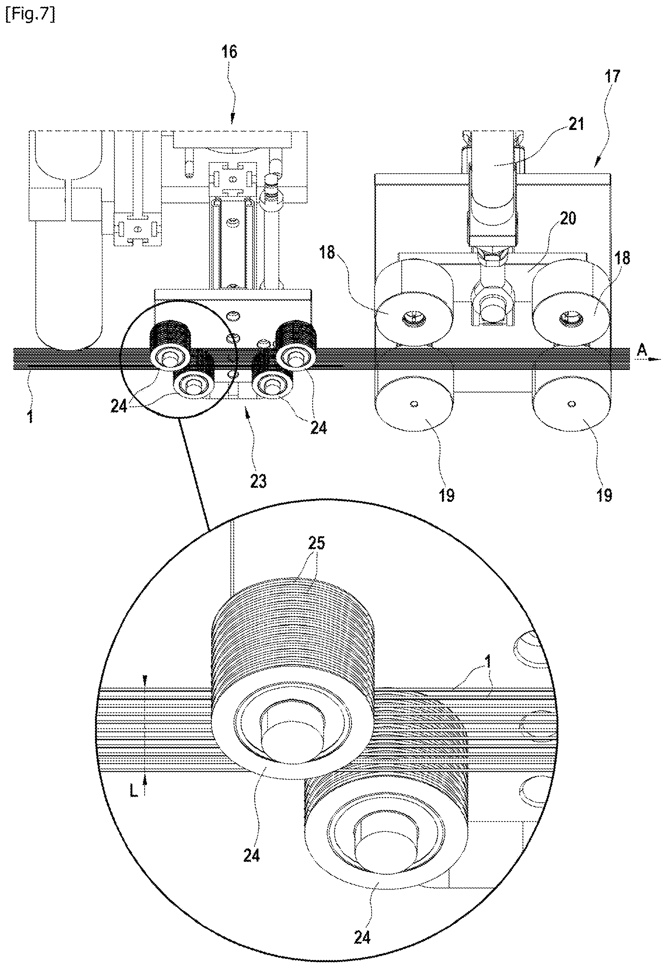

Les figures 6 et 7 illustrent un exemple de réalisation d'une installation 10 de mise en œuvre du procédé de préparation de fibres optiques conforme à l'invention. L'installation 10 comporte un bâti 11 conçu pour supporter différents postes et notamment un poste de distribution 12 de fibres optiques 1 destinées à subir une opération de traitement laser pour créer des altérations ponctuelles 4 sur la gaine 3 des fibres optiques. Le poste de distribution 12 comporte pour chaque fibre optique 1, un dévidoir 13 tel qu'un tambour sur lequel est bobinée une fibre optique 1. Dans l'exemple illustré, le poste de distribution 12 comporte onze dévidoirs 13 répartis en deux ensembles superposés puisque l'installation vise le traitement simultané d'une série de onze fibres optiques 1. Bien entendu, le poste de distribution 12 comporte autant de dévidoirs 13 que de fibres optiques 1 à préparer simultanément.

Avantageusement, l'installation 10 comporte un dispositif de mise sous tension pour chacune des fibres optiques 1 sortant des dévidoirs 13. Ce dispositif de mise sous tension peut être réalisé de toute manière appropriée, comme sous la forme de contrepoids ou de systèmes de rappel élastique faisant partie du poste de distribution 12 par exemple.

L'installation 10 comporte également de préférence, un système de prise en charge 15 des fibres optiques issues des dévidoirs 13 afin de les positionner les unes à côté des autres avant leur entrée dans un poste 16 d'émission d'un faisceau laser F. Ce système de prise en charge 15 permet de mettre en parallèle les fibres optiques 1 sortant des dévidoirs en les positionnant avantageusement toutes dans un plan d'extension par exemple horizontal. Ce système de prise en charge 15 comporte notamment des galets supportés par le bâti 11 et positionnés pour amener les fibres optiques 1 à s'étendre parallèlement entre elles pour occuper ensemble une largeur totale L inférieure à la largeur initiale occupée au niveau du poste de distribution 12. Tel que cela ressort clairement des figures 6 et 7, le système de prise en charge 15 positionne les fibres optiques 1 parallèlement les unes aux autres, en amont du poste 16 d'émission du faisceau laser, supporté par le bâti 11.

L'installation 10 comporte également un système 17 assurant la translation selon la direction de translation A, de chaque fibre optique 1 pour assurer leur défilement devant le poste d'émission 16 du faisceau laser. Avantageusement, le système 17 assure la translation simultanée, selon la direction de translation A, de l'ensemble des fibres optiques 1 pour assurer leur défilement devant le poste d'émission 16 du faisceau laser, en étant disposées les unes à côté des autres. Dans l'exemple illustré, le système de translation 17 comporte deux paires de galets superposés 18, 19 entre lesquels les fibres optiques 1 sont entrainées par friction. Chaque galet 18, 19 est monté rotatif autour d'un axe horizontal et se trouve muni d'une surface d'entrainement par exemple lisse en polyuréthane, en contact avec la série des fibres optiques 1 disposées côte à côte. Bien entendu, la largeur des galets 18, 19 est adaptée pour recevoir la série de fibres optiques disposées les unes à côté des autres. Par exemple, le galet supérieur 18 de chaque paire est monté sur un chariot mobile 20 déplaçable par un actionneur 21 pour assurer le déplacement des galets supérieurs 18 par rapport aux galets inférieurs 19. L'actionneur 21 permet ainsi de maitriser la pression des galets 18, 19 sur les fibres optiques 1.

Par exemple, les galets inférieurs 19 sont entrainés en rotation par un moteur électrique assurant l'entrainement en translation simultanée de l'ensemble des fibres optiques 1. Avantageusement, le moteur électrique est piloté par un dispositif de commande permettant une rotation à vitesse variable assurant la translation des fibres optiques 1 avec une vitesse variable.

Le poste d'émission 16 d'un faisceau laser F est adapté pour fournir un faisceau laser apte à être déplacé selon une direction de déplacement T transversale à la direction de translation A des fibres optiques pour créer des altérations ponctuelles 4 de la gaine 3 des fibres optiques. Bien entendu, la puissance du faisceau laser F est adaptée pour créer des destructions ou des modifications de surface de la gaine pour mettre à nu le cœur de la fibre optique et obtenir les altérations ponctuelles 4. Avantageusement, le poste d'émission 16 comporte un laser CO2 avec une tête d'émission d'un faisceau laser F avec une puissance constante.

La tête d'émission du faisceau laser du poste d'émission 16 est mobile selon une direction. De préférence, la direction de déplacement T du faisceau laser F est perpendiculaire à la direction de translation A des fibres optiques 1. Classiquement, le poste d'émission 16 comporte une unité de pilotage du faisceau laser qui combiné au dispositif de commande du système de translation 17, permet de réaliser les altérations ponctuelles 4 sur les fibres optiques selon un espacement variable déterminé.

Selon une caractéristique avantageuse de réalisation, l'installation 10 comporte également un système 23 de guidage des fibres optiques 1 permettant de guider les fibres optiques en translation parallèle les unes aux autres. Ainsi, ce système 23 de guidage assure la maitrise de l'entraxe ou du pas d'écartement entre les fibres optiques 1. Ce système de guidage 23 permet également de maîtriser la distance focale c'est-à-dire la distance entre les fibres optiques 1 et la tête d'émission du faisceau laser. Ce système de guidage 23 comporte par exemple deux paires de rouleaux de guidage superposés 24 entre lesquels les fibres optiques 1 sont guidées. Comme cela apparait sur le détail de la figure 7, les deux rouleaux de guidage 24 de chaque paire sont décalés selon la direction de translation A. Plus précisément, les rouleaux de guidage 24 supérieurs sont, par rapport aux rouleaux de guidage 24 inférieurs, décalés en sens contraire vers l'extérieur du système de guidage. Chaque rouleau de guidage 24 est monté mobile autour d'un axe de rotation horizontal et est muni d'une série de gorges 25 juxtaposées recevant chacune en partie une fibre optique 1. Avantageusement, la direction de déplacement T du faisceau laser F est située entre les deux paires de rouleaux de guidage superposés 24.

En sortie du poste d'émission 16 du faisceau laser, l'installation 10 comporte un poste 27 de découpe des fibres optiques pourvues des altérations ponctuelles 4. Par exemple, ce poste de découpe 27 prend en charge chaque fibre optique 1 en la découpant à la longueur souhaitée pour la réalisation du système lumineux à émission lumineuse latérale. Cette découpe est réalisée manuellement ou de façon automatisée.

Dans l'exemple illustré, l'installation 10 comporte en amont du poste de découpe 27, un poste 29 de stockage temporaire des fibres optiques 1. Ce poste de stockage temporaire 29 assure par exemple le stockage vertical des fibres optiques à l'aide galets de renvoi 30 disposés sur des barres verticales 31.

L'installation 10 offre l'avantage d'être de conception simple tout en permettant la préparation de fibres optiques à émission latérale de lumière. Cette installation 10 est adapté pour obtenir une homogénéité de la lumière sur toute la longueur des fibres optiques et ce, pour des fibres optiques de grande longueur pouvant atteindre par exemple une longueur de 4 m.

## Revendications

1. Procédé de préparation de fibres optiques (1) composées chacune d'un cœur (2) entouré par une gaine (3), en vue de créer des fibres optiques à émission lumineuse latérale, le procédé étant tel qu'on:
- assure le défilement en translation pour au moins une fibre optique (1) devant un poste d'émission d'un faisceau laser (F),
- on déplace alternativement selon un premier sens d'une direction transversale (T) à la direction de translation (A) des fibres optiques, et selon un second sens de la direction transversale (T), opposé au premier sens, le faisceau laser (F) dirigé vers les fibres optiques pour créer des altérations ponctuelles (4) de la gaine des fibres optiques.

2. Procédé selon l'une des revendications précédentes selon lequel on assure le défilement en translation pour une série de fibres optiques (1) disposées les unes à côté des autres, devant un poste d'émission d'un faisceau laser (F).

3. Procédé selon l'une des revendications précédentes selon lequel on déplace le faisceau laser (F) selon la direction transversale avec une trajectoire débutant en aval de la première fibre optique rencontrée et finissant en amont de la dernière fibre optique rencontrée.

4. Procédé selon l'une des revendications précédentes selon lequel on assure une mise en tension des fibres optiques (1) lors de leur défilement en translation devant le poste d'émission du faisceau laser (F).

5. Procédé selon l'une des revendications précédentes selon lequel on assure le défilement en translation des fibres optiques (1) selon une vitesse variable pour créer sur chaque fibre optique, des altérations ponctuelles (4) dont au moins certaines d'entre elles présentent des distances d'écartement différentes.

6. Procédé selon la revendication précédente selon lequel on assure le défilement en translation des fibres optiques selon une vitesse variable pour obtenir une homogénéité de la lumière sur toute la longueur d'un système lumineux à émission lumineuse latérale comportant une ou plusieurs fibres optiques (1).

7. Procédé selon l'une des revendications précédentes selon lequel le faisceau laser (F) présente une puissance constante.

8. Procédé selon l'une des revendications précédentes selon lequel après la création des altérations ponctuelles (4), les fibres optiques sont découpées et insérées dans une enveloppe translucide pour former un système lumineux à émission lumineuse latérale.

9. Procédé selon l'une des revendications précédentes selon lequel avant leur découpage, les fibres optiques (1) sont stockées temporairement.

10. Installation de préparation de fibres optiques (1) composées chacune d'un cœur (2) entouré par une gaine (3), en vue de former un système lumineux à émission lumineuse latérale pour mettre en œuvre le procédé de préparation de fibres optiques conforme à l'une des revendications 1 à 9, l'installation comportant :
- un poste de distribution (12) comportant pour chaque fibre optique (1), un dévidoir (13) d'une fibre optique,
- un système (17) assurant la translation des fibres optiques (1) issues des dévidoirs pour assurer leur défilement devant un poste d'émission (16) d'un faisceau laser (F),
- un poste d'émission (16) d'un faisceau laser (F) déplacé alternativement selon les deux sens d'une direction (T) transversale à la direction de translation (A) des fibres optiques pour créer des altérations ponctuelles (4) de la gaine des fibres optiques.

11. Installation selon la revendication 10 selon laquelle elle comporte un système (15) de prise en charge des fibres optiques (1) issues des dévidoirs (13) afin de les positionner parallèlement les unes à côté des autres.

12. Installation selon l'une des revendications 10 ou 11 selon laquelle le système (17) assurant la translation des fibres optiques possède une vitesse variable.

13. Installation selon l'une des revendications 10 à 12 selon laquelle elle comporte un système (23) de guidage des fibres optiques (1) permettant de maitriser l'entraxe entre les fibres optiques (1).

14. Installation selon l'une des revendications 10 à 13 selon laquelle elle comporte un poste de découpe (27) des fibres optiques (1).

15. Installation selon l'une des revendications 10 à 14 selon laquelle elle comporte un dispositif de mise sous tension de chacune des fibres optiques (1).

## Patentansprüche

1. Verfahren zur Herstellung von Glasfasern (1), die sich jeweils aus einem Kern (2) zusammensetzen, welcher von einer Hülle (3) umgeben ist, um Glasfasern mit seitlicher Lichtaussendung zu schaffen, wobei das Verfahren derart beschaffen ist, dass:
- sichergestellt wird, dass mindestens eine Glasfaser (1) vor einem Organ, das einen Laserstrahl (F) aussendet, in einer Translationsbewegung entlanggeführt wird;
- der Laserstrahl (F), welcher auf die Glasfasern gerichtet ist, abwechselnd gemäß einer ersten Laufrichtung einer quer (T) zur Translationsrichtung (A) der Glasfasern ausgerichteten Linie und gemäß einer zweiten Laufrichtung der quer (T) ausgerichteten Linie, die der ersten Laufrichtung entgegengesetzt ist, bewegt wird, um punktuelle Schwachstellen (4) in der Hülle der Glasfasern zu schaffen.

2. Verfahren nach einem einer vorhergehenden Ansprüche, gemäß welchem das Vorbeiführen in einer Translationsbewegung für eine Reihe von Glasfasern (1) sichergestellt wird, die nebeneinander vor einem Organ angeordnet sind, welches einen Laserstrahl (F) aussendet.

3. Verfahren nach einem der vorhergehenden Ansprüche, gemäß welchem der Laserstrahl (F) gemäß der quer ausgerichteten Linie derart bewegt wird, dass seine Laufstrecke im Vorfeld der ersten Glasfaser beginnt, auf welche er trifft, und hinter der letzten Glasfasern endet, auf welche er trifft.

4. Verfahren nach einem der vorhergehenden Ansprüche, gemäß welchem sichergestellt wird, dass die Glasfasern (1) gespannt sind, während sie in einer Translationsbewegung vor dem Organ, welches den Laserstrahl (F) aussendet, entlanggeführt werden.

5. Verfahren nach einem der vorhergehenden Ansprüche, gemäß welchem sichergestellt wird, dass die Glasfasern (1) in einer Translationsbewegung mit einer variablen Geschwindigkeit entlanggeführt werden, um an jeder der Glasfasern punktuelle Schwachstellen (4) zu schaffen, von welchen zumindest einige verschiedene Abstände aufweisen.

6. Verfahren nach dem vorhergehenden Anspruch, gemäß welchem sichergestellt wird, dass die Glasfasern in einer Translationsbewegung mit einer variablen Geschwindigkeit entlanggeführt werden, um eine Homogenität des Lichts über die gesamte Länge eines Lichtsystems mit seitlicher Lichtaussendung zu erzielen, welches eine oder mehrere Glasfasern (1) aufweist.

7. Verfahren nach einem der vorhergehenden Ansprüche, gemäß welchem der Laserstrahl (F) eine konstante Leistung aufweist.

8. Verfahren nach einem der vorhergehenden Ansprüche, gemäß welchem die Glasfasern nach dem Schaffen der punktuellen Schwachstellen (4) zugeschnitten und in einem durchscheinenden Mantel eingefügt werden, um ein Lichtsystem mit seitlicher Lichtaussendung zu bilden.

9. Verfahren nach einem beliebigen der vorhergehenden Ansprüche, gemäß welchem die Glasfasern (1) vorübergehend gelagert werden, bevor sie zugeschnitten werden.

10. Anlage zur Herstellung von Glasfasern (1), die sich jeweils aus einem Kern (2) zusammensetzen, welcher von einer Hülle (3) umgeben ist, um ein Lichtsystem mit seitlicher Lichtaussendung zu bilden, wobei die Anlage dazu dient, das Verfahren zur Herstellung von Glasfasern gemäß einem der Ansprüche 1 bis 9 durchzuführen, und Folgendes umfasst:
- eine Abgabestelle (12), die für jede der Glasfasern (1) eine Haspel (13) einer Glasfaser aufweist,
- ein System (17), das die Translationsbewegung der Glasfasern (1) sicherstellt, welche aus den Haspeln stammen, um sicherzustellen, dass sie vor dem Organ (16), welches einen Laserstrahl (F) aussendet, entlanggeführt werden,
- ein Organ (16), das einen Laserstrahl (F) aussendet, wobei es abwechselnd gemäß den beiden Laufrichtungen einer quer (T) zur Translationsrichtung (A) der Glasfasern ausgerichteten Linie bewegt wird, um punktuelle Schwachstellen (4) der Hülle des Glasfasern zu schaffen.

11. Anlage nach Anspruch 10, wobei sie ein System (15) zur Übernahme der Glasfasern (1) aufweist, welche von den Haspeln (13) stammen, um diese parallel nebeneinander anzuordnen.

12. Anlage nach einem der Ansprüche 10 oder 11, wobei das System (17) sicherstellt; dass die Translationsbewegung der Glasfasern mit variabler Geschwindigkeit erfolgt.

13. Anlage nach einem der Ansprüche 10 bis 12, wobei sie ein System (23) zur Führung der Glasfasern (1) aufweist, das es ermöglicht, den Achsenabstand zwischen den Glasfasern (1) gezielt festzulegen.

14. Anlage nach einem der Ansprüche 10 bis 13, wobei sie ein Organ (27) zum Zuschneiden der Glasfasern (1) aufweist.

15. Anlage nach einem der Ansprüche 10 bis 14, wobei sie eine Vorrichtung zum Spannen jeder der Glasfasern (1) aufweist.

## Claims

1. Method for preparing optical fibers (1) each composed of a core (2) surrounded by a sheath (3), in order to create optical fibers with lateral light emission, the method being such that it is:
- ensured translational travel for at least one optical fiber (1) in front of a station for emitting a laser beam (F), and
- moved alternately along a first way of a direction (T) transverse to the direction of translation (A) of the optical fibers, and along a second way of the transverse direction (T), opposite to the first way, the laser beam (F) directed towards the optical fibers in order to create punctual alterations (4) of the sheath of the optical fibers.

2. Method according to any of the preceding claims, wherein the translational travel is ensured for a series of optical fibers (1) disposed next to each other, in front of a station for emitting a laser beam (F).

3. Method according to any of the preceding claims, wherein the laser beam (F) is moved along the transverse direction with a trajectory beginning downstream of the first optical fiber encountered and ending upstream of the last optical fiber encountered.

4. Method according to any of the preceding claims, wherein a tensioning of the optical fibers (1) is ensured during their translational travel in front of the station for emitting the laser beam (F).

5. Method according to any of the preceding claims, wherein the translational travel of the optical fibers (1) is ensured at a variable speed in order to create on each optical fiber punctual alterations (4), at least some of which have different spacing distances.

6. Method according to the preceding claim, wherein the translational travel of the optical fibers is ensured at a variable speed in order to obtain homogeneity of the light over the entire length of a light system with lateral light emission including one or more optical fibers (1).

7. Method according to any of the preceding claims, wherein the laser beam (F) has a constant power.

8. Method according to any of the preceding claims, wherein after the creation of the punctual alterations (4), the optical fibers are cut and inserted into a translucent envelope to form a light system with lateral light emission.

9. Method according to any of the preceding claims, wherein before their cutting, the optical fibers (1) are stored temporarily.

10. Installation for preparing optical fibers (1) each composed of a core (2) surrounded by a sheath (3), in view of forming a light system with lateral light emission for the implementation of the method for preparing optical fibers according to any of claims 1 to 9, the installation including:
- a distribution station (12) including for each optical fiber (1), a reel (13) of an optical fiber,
- a system (17) ensuring the translation of the optical fibers (1) coming from the reels to ensure their travel in front of a station (16) for emitting a laser beam (F),
- a station (16) for emitting a laser beam (F) moved alternately along both ways of a direction (T) transverse to the direction of translation (A) of the optical fibers in order to create punctual alterations (4) in the sheath of the optical fibers.

11. Installation according to claim 10, wherein it includes a system (15) for handling the optical fibers (1) coming from the reels (13) in order to position them parallel next to each other.

12. Installation according to any of claims 10 and 11, wherein the system (17) ensuring translation of the optical fibers has a variable speed.

13. Installation according to any of claim 10 to 12, wherein it includes a system (23) for guiding the optical fibers (1) making it possible to control the center distance between the optical fibers (1).

14. Installation according to any of claims 10 to 13, wherein it includes a station for cutting (27) the optical fibers (1).

15. Installation according to any of claims 10 to 14, wherein it includes a device for tensioning each of the optical fibers (1).
